# FASCICULE DE BREVET EUROPEEN

(11) **EP 1 312 588 B1**
(45) Date de publication et mention de la délivrance du brevet: **08.03.2006**
(21) Numéro de dépôt: 02370049.5
(22) Date de dépôt: 18.11.2002
(51) Int. Cl.: C04B 7/32

(54) **Ciment blanc, et procédé et installation pour sa fabrication**
Weisszement und Verfahren und Vorrichtung zu seiner Herstellung
White cement, and process and apparatus for its manufacture

(30) Priorité: 19.11.2001 FR 0114943
(43) Date de publication de la demande: 21.05.2003
(73) Titulaire: Carrières du Boulonnais, 62250 Ferques (FR)
(72) Inventeur: Beauvent, Guy, 62720 Wierre Effroy (FR); Holard, Eric, 62100 Calais (FR)
(74) Mandataire: Hennion, Jean-Claude

(56) Documents cités:
- WO-A-99/07648
- DE-A- 19 611 454
- GB-A- 1 535 208
- DATABASE WPI Week 197746 Derwent Publications Ltd., London, GB; AN 1977-81806y XP002211555 & JP 52 117920 A (MATSUSHITA ELECTRIC WORKS LTD)
- DATABASE WPI Week 197328 Derwent Publications Ltd., London, GB; AN 1973-39993U XP002211556 & JP 48 023170 B (MITSUBISHI CEMENT CO)
- DATABASE WPI Week 198218 Derwent Publications Ltd., London, GB; AN 1982-35914E XP002211557 & JP 57 050536 A (KAO SOAP CO LTD)

## Description

La présente invention concerne, de façon générale et selon un premier de ses aspects, l'industrie du ciment.

Plus précisément, l'invention concerne, selon son premier aspect, un ciment blanc.

Des ciments blancs sont connus et commercialisés. Leurs propriétés sont sensiblement celles des ciments Portland dont ils dérivent. Les ciments blancs se démarquent des ciments Portland par leur blancheur constante, leur vitesse de prise, et leur résistance mécaniqùe qui, en général, n'est pas exceptionnelle.

La sélection des matières premières lors de la fabrication d'un ciment Portland blanc revêt une grande importance, puisque aucune des matières premières de base ne doit contenir de quantités importantes Fe₂O₃ ou d'autres composés du fer susceptibles d'apporter une coloration au ciment. Ainsi, des traces de Fe^{III} peuvent apporter une coloration au ciment qui le rend inapte à la commercialisation sous l'appellation « ciment blanc », en raison de l'apparition d'une teinte jaunâtre indésirable. Les composés colorés du fer dans les ciments Portland artificiels sont présents essentiellement sous la forme de phases C₄AF très colorées.

De plus, lors de la fabrication, les briques réfractaires de garnissage du four rotatif ne doivent pas contenir de chrome, sous peine d'apparition de coloration. A cet effet, des briques réfractaires magnésiennes à spinelles sans chrome sont utilisées.

Dans le four, les fumées de combustion doivent être exemptes de métaux lourds. En effet, ces derniers, même sous forme de traces, sont susceptibles d'altérer la blancheur du ciment.

Une cimenterie qui produit du ciment blanc travaille de manière spécifique et ne peut être conduite comme une cimenterie de ciment Portland classique. En effet, l'atmosphère du four doit alors être réductrice afin d'assurer la réduction du Fe^{III} en Fe^{II} de façon à empêcher la coloration du clinker. Pour éviter les phénomènes de recoloration par oxydation lors d'un refroidissement à l'air, il faut refroidir le plus souvent les clinkers à l'eau, ce qui provoque une perte d'énergie considérable, car la chaleur contenue dans le clinker en sortie de four ne pourra plus alors être utilisée dans le procédé, par exemple pour préchauffer les matières premières avant leur introduction dans le four.

Le ciment blanc selon l'invention peut être obtenu même en présence de quantités significatives de fer, ce dernier pouvant être inclus dans des phases minérales n'apportant pas une variation de couleur observable à l'oeil nu.

A cet effet, le ciment blanc est caractérisé en ce qu'il comprend un clinker sulfo-alumineux, obtenu par clinkérisation, en présence d'oxygène, d'un cru comprenant un sulfate de calcium et/ou d'aluminium, un produit d'oxydation de l'aluminium, un produit d'oxydation du calcium, SiO₂ et/ou un produit contenant de la silice ou des silicates, tous ces composés étant présents sous forme anhydre ou hydratée, individuellement ou en combinaison, en ce que ledit ciment blanc contient plus de 0% et jusqu'à 2,1% en poids de fer sous la forme d'un composé d'oxydation du fer, et en ce qu'il ne contient pas de phase C₄AF détectable aux rayons X.

Ainsi, il est possible de produire un ciment blanc en utilisant des matières premières contenant du fer. L'atmosphère du four lors de la clinkérisation est oxydante, ce qui ne permet pas d'obtenir des produits de réduction du fer pouvant aboutir à un blanchiment du clinker, mais de maintenir le fer à un degré d'oxydation élevé, par exemple sous forme de Fe^{III}.

De façon surprenante, il a été observé que les clinkers sulfo-alumineux obtenus selon l'invention, et contenant du fer sont blancs. Contre toute attente, les analyses par rayons X d'échantillons de ciment blanc selon l'inventicn ont montré que les ciments blancs obtenus ne contenaient pas de phases cristallines C₄AF qui sont responsables de coloration dans les ciments Portland dès que des traces de fer sont présentes. En revanche, du C₄AF apparaît en général dans les ciments sulfoalumineux lorsque des quantités plus importantes de fer sont présentes. Ainsi, du fer pourra être présent dans les matières premières à raison d'un maximum de 2,1% en poids de fer, tout en permettant le maintien de l'aspect blanc du clinker et ultérieurement du ciment.

En outre, le ciment blanc selon l'invention permet d'obtenir des valeurs de résistance à la compression très élevées, comparativement à celles obtenues pour les ciments Portland artificiels blancs. Ainsi, la résistance à la compression 24 heures après la prise du ciment est couramment voisine de 50 MPa, ce qui est sans précédent et permet dès lors un décoffrage très rapide des pièces fabriquées avec ce ciment blanc, alors que dans le cas d'un ciment Portland artificiel blanc ou gris, elle sera voisine de 15 MPa. De plus, cette résistance à la compression croit progressivement et peut atteindre près de 80 MPa 28 jours après la prise, alors qu'elle est habituellement voisine de 50 MPa pour des ciments Portland artificiels gris, et en général voisine de (20-30 MPa et au mieux d'environ 45 MPa) pour des ciments Portland blancs.

L'addition de composés d'oxydation colorés au clinker blanc sera proscrite dans la mesure où une teinte blanche est recherchée pour le ciment. De même, l'addition de composés minéraux ou organiques blancs mais susceptibles de réagir avec le clinker en phase solide ou lors du mouillage du ciment pour produire des produits colorés n'est pas recommandée.

En revanche, dans la mesure où une teinte beige est recherchée, il est possible d'augmenter légèrement la teneur en fer des matières premières jusqu'à environ 3% en poids de fer.

De même, l'addition de pigments et colorants organiques et minéraux sera possible afin d'obtenir des teintes variées.

L'expression « composés d'oxydation colorés » signifie qu'il s'agit de composés d'oxydation d'éléments ou de combinaisons de composés d'oxydation d'éléments qui absorbent la lumière dans le domaine visible.

Des composés absorbant la lumière dans le domaine visible peuvent être des produits d'oxydation de métaux choisis parmi V, Cr, Mn, Fe, Co, Ni, Cu, Zn, Nb, Mo, Ag, Cd, Sn, Sb, Ce, Ta, W, Hg, Tl, Pb, Bi.

L'expression « domaine visible » signifie des longueurs d'onde comprises entre environ 400 nm et environ 800 nm.

Parmi les composés absorbant la lumière dans le domaine visible, de nombreux composés d'oxydation d'éléments choisis parmi Cr, Mn, Fe, Co, Ni, Mo, et Cd, présentent généralement au moins une bande d'absorption dans le domaine visible. Ces derniers composés d'oxydation peuvent être présents parfois en grande quantité dans les ciments, comme c'est le cas pour le fer, présent sous forme de Fe^{III} dans certaines phases cristallines des ciments Portland. La présence de Fe^{III} dans les ciments Portland est responsable, en majeure partie, de son aspect gris.

A Quantité égale, l'intensité de la coloration du composé d'oxydation dépendra bien entendu de l'élément présent et des phases cristallines formées.

Un des mérites de l'invention est d'avoir observé que les ciments sulfo-alumineux se prêtent plus facilement à l'obtention de ciments blancs que les ciments Portland. En effet, la présence de fer en faible quantité n'entraîne pas d'altération significative de la blancheur du ciment, alors qu'elle est fatale pour les ciments Portland.

Selon un mode de réalisation préféré, le sulfate de calcium est choisi dans le groupe constitué par l'anhydrite, le plâtre, le gypse naturel, le gypse obtenu lors de la fabrication de composés minéraux tels que l'acide phosphorique, l'acide fluorhydrique, ou l'acide borique, en ce que le produit d'oxydation de l'aluminium est d'origine naturelle ou industrielle et contient au moins un des produits choisis parmi Al₂O₃, Al (OH)₃, AlO(OH), Al(OH)₃, et en ce que le produit d'oxydation du calcium est choisi dans le groupe constitué par : un carbonate de calcium tel que le calcaire et la craie, un oxyde de calcium tel que la chaux, un hydroxyde de calcium.

Le ciment blanc selon l'invention comprend avantageusement de 99 à 45% de clinker sulfo-alumineux et de 1 à 55% d'un sulfate de calcium blanc.

Selon un de ses aspects, le ciment blanc selon l'invention peut comprendre une charge de fibres de verre. D'autres charges sont possibles dans la mesure où elles sont chimiquement et physiquement compatibles avec le ciment, par exemple, des fibres de cellulose modifiées, des fibres polymériques, des fibres à haut module de traction, de l'amiante, des fibres de carbone.

Un des intérêts des ciments blancs de l'invention est qu'ils ne nécessitent pas l'utilisation de fibres de verre spécifiquement traitées par des composés du zirconium, tel que ZrO₂, comme c'est le cas pour les ciments Portland. Des fibres de verre non traitées et donc peu coûteuses peuvent dès lors être chargées dans des ciments blancs selon l'invention.

Selon un de ses aspects, le ciment blanc selon l'invention peut comprendre une un sable et/ou un gravier.

Le clinker sulfo-alumineux blanc est obtenu de préférence par clinkérisation dans un four à rouleaux. Des ciments blancs acceptables peuvent être préparés avantageusement dans un four à rouleau et selon un procédé décrits dans la demande de brevet Français N° 01 06 830 non encore publiée. Dans ce dernier cas, il est possible de préparer indifféremment des ciments blancs sulfoalumineux ou des ciments gris sulfoalumineux, ou encore des ciments ferroalumineux dans une seule et même installation, en particulier, en utilisant le même four pour tous les types de ciments mentionnés ci-dessus, sans risquer une quelconque contamination en métaux lourds ou la présence de quantités trop importantes de fer dans des crus destinés à devenir des clinkers, puis des ciments blancs.

Selon un autre de ses aspects, l'invention concerne un objet obtenu par la prise d'un ciment blanc ou d'une composition cimentaire selon l'invention avec de l'eau.

La prise du ciment blanc ou de la composition cimentaire selon l'invention peut s'effectuer en immergeant, au moins en partie, une armature métallique.

L'armature métallique peut être en fer, en acier, en acier galvanisé, en acier inoxydable, en acier passivé.

Un objet selon l'invention peut être un élément de construction tel qu'un mur, une dalle, un ouvrage d'art tel qu'un pont, une tablette de bord de fenêtre, une marche et une contre-marche d'escalier, une dallé de revêtement de sol et de mur, un mur barrière au son, un revêtement routier, une poutre, un pilier, un tampon de regard, un élément de mobilier urbain, une cuve de stockage de produits solides liquides ou pâteux.

En raison des résistances à la compression particulièrement élevées des ciments de l'invention, leur utilisation dans le génie civil, en particulier pour la réalisation d'ouvrage d'art comme des ponts et des tunnels routiers est particulièrement préférée.

Aux fins d'illustration, deux exemples de préparation de compositions sont maintenant présentés.

Composition du cru :

| CRU 1 | Poids (en %) |
|---|---|
| Calcaire | 35,37 |
| Al (OH)₃ résiduaire | 51,70 |
| Phosphogypse résiduaire | 12,93 |
| Somme | 100 |

Teneur en fer du cru 1 : 1, 26% en poids de Fe₂O₃.
Aspect du clinker : blanc.

| CRU 2 | Poids (en %) |
|---|---|
| Craie | 36,62 |
| Al₂O₃ | 40,24 |
| Phosphogypse résiduaire | 23,14 |
| Somme | 100 |

Teneur en fer du cru 2 : 0,14% en poids de Fe₂O₃. Aspect du clinker : blanc.

Caractéristiques physiques d'un ciment blanc préparé à partir du cru 2 :

| Ciment blanc | Rc1 | Rc3 | Rc7 | Rc28 | Rf1 | Rf3 | Rf7 | Rf28 |
|---|---|---|---|---|---|---|---|---|
| Mpa | 47,9 | 70,94 | 74,05 | 78,33 | 8, 1 | 9,58 | 8,9 | 9, 12 |

Rc: Résistance à la compression
Rf : Résistance à la flexion-cisaillement

les chiffres à droite des symboles Rc et Rf indiquent des jours.

De telles valeurs de résistance à la compression et à la flexion ne peuvent être dépassées qu'au prix d'efforts considérables pour les ciments Portland artificiels.

## Revendications

1. Ciment blanc, **caractérisé en ce qu'**il comprend un clinker sulfo-alumineux blanc, obtenu par clinkérisation, en présence d'oxygène, d'un cru comprenant un sulfate de calcium et/ou d'aluminium, un produit d'oxydation de l'aluminium, un produit d'oxydation du calcium, SiO₂ et/ou un produit contenant de la silice ou des silicates, tous ces composés étant présents sous forme anhydre ou hydratée, individuellement ou en combinaison, **en ce que** ledit ciment blanc contient plus de 0% et jusqu'à 2,1% en poids de fer sous la forme d'un composé d'oxydation du fer, et **en ce qu'**il ne contient pas de phase C₄AF détectable aux rayons X.

2. Ciment blanc selon la revendication 1, **caractérisé en ce que** le sulfate de calcium est choisi dans le groupe constitué par l'anhydrite, le plâtre, le gypse naturel, le gypse obtenu lors de la fabrication de composés minéraux tels que l'acide phosphorique, l'acide fluorhydrique, ou l'acide borique, **en ce que** le produit d'oxydation de l'aluminium est d'origine naturelle ou industrielle et contient au moins un des produits choisis parmi Al₂O₃, Al(OH)₃, AlO(OH), Al(OH)₃, et **en ce que** le produit d'oxydation du calcium est choisi dans le groupe constitué par : un carbonate de calcium tel que le calcaire et la craie, un oxyde de calcium tel que la chaux, un hydroxyde de calcium.

3. Ciment blanc selon la revendication 1 ou la revendication 2, **caractérisé en ce qu'**il comprend de 99 à 45% de clinker sulfo-alumineux et de 1 à 55% d'un sulfate de calcium blanc.

4. Composition cimentaire **caractérisée en ce qu'**elle comprend un ciment blanc selon l'une quelconque des revendications précédentes, et une charge de fibres de verre.

5. Composition cimentaire, **caractérisée en ce qu'**elle comprend un ciment blanc selon l'une quelconque des revendications 1 à 3 et un sable et/ou un gravier.

6. Procédé de préparation d'un ciment blanc selon l'une quelconque des revendications 1 à 3, **caractérisé en ce que** le clinker sulfo-alumineux blanc est obtenu par clinkérisation dans un four à rouleaux.

7. Objet, **caractérisé en ce qu'**il est obtenu par la prise d'un ciment selon l'une quelconque des revendications 1 à 3 ou d'une composition cimentaire selon l'une quelconque des revendications 4 à 5 avec de l'eau.

8. Objet selon la revendication 7, **caractérisé en ce que** la prise du ciment s'effectue en immergeant, au moins en partie, une armature métallique.

9. Objet selon la revendication 8, **caractérisé en ce que** l'armature métallique est en fer, en acier, en acier galvanisé, en acier inoxydable, en acier passivé.

10. Objet selon l'une quelconque des revendications 7 à 9, **caractérisé en ce qu'**il est un élément de construction tel qu'un mur, une dalle, un ouvrage d'art tel qu'un pont, une tablette de bord de fenêtre, une marche et une contre-marche d'escalier, une dalle de revêtement de sol et de mur, un mur barrière au son, un revêtement routier, une poutre, un pilier, un tampon de regard, un élément de mobilier urbain, une cuve de stockage de produits solides liquides ou pâteux.

## Patentansprüche

1. Weißer Zement, **dadurch gekennzeichnet, daß** er einen weißen Sulfoaluminat-Klinker umfaßt, der durch Klinkerbildung in Anwesenheit von Sauerstoff aus einem Rohgemisch erhalten wird, das ein Kalzium- und/oder Aluminiumsulfat, ein Oxidationsprodukt des Aluminiums, ein Oxidationsprodukt des Kalziums, SiO₂ und/oder ein Kieselerde oder Silikate enthaltendes Produkt umfaßt, wobei all diese Verbindungen in wasserfreier oder wasserhaltiger Form, einzeln oder in Kombination vorliegen, daß der weiße Zement mehr als 0 und bis zu 2,1 Gew.-% Eisen in Form einer Oxidationsverbindung des Eisens aufweist, und daß er keine mittels Röntgenstrahlen erfaßbare C₄AF-Phase aufweist.

2. Weißer Zement nach Anspruch 1, **dadurch gekennzeichnet, daß** das Kalziumsulfat ausgewählt ist aus der Gruppe bestehend aus Anhydrit, Gips, Naturgips, Gips, der während der Herstellung von mineralischen Verbindungen wie Phosphorsäure, Fluorwasserstoffsäure oder Borsäure erhalten wird, daß das Oxidationsprodukt des Aluminiums natürlicher oder industrieller Herkunft ist und wenigstens eines der Produkte enthält, die aus Al₂O₃, Al(OH)₃, AlO(OH), Al(OH)₃ ausgewählt sind, und daß das Oxidationsprodukt des Kalziums aus der Gruppe bestehend aus einem Kalziumkarbonat, wie Kalkstein und Kreide, einem Kalziumoxid, wie Kalk, einem Kalziumhydroxid ausgewählt ist.

3. Weißer Zement nach Anspruch 1 oder Anspruch 2, **dadurch gekennzeichnet, daß** er zwischen 99 und 45 % Sulfoaluminat-Klinker und zwischen 1 und 55 % eines weißen Kalziumsulfats enthält.

4. Zementzusammensetzung, **dadurch gekennzeichnet, daß** sie einen weißen Zement nach irgendeinem der vorhergehenden Ansprüche sowie eine Glasfaserfüllung umfaßt.

5. Zementzusammensetzung, **dadurch gekennzeichnet, daß** sie einen weißen Zement nach irgendeinem der Ansprüche 1 bis 3 und einen Sand und/oder ein Kies umfaßt.

6. Verfahren zur Gewinnung eines weißen Zements nach irgendeinem der Ansprüche 1 bis 3, **dadurch gekennzeichnet, daß** der weiße Sulfoaluminat-Klinker durch Klinkerbildung in einem Rollenherdofen erhalten wird.

7. Gegenstand, **dadurch gekennzeichnet, daß** er durch das Abbinden eines Zements nach irgendeinem der Ansprüche 1 bis 3 oder einer Zementzusammensetzung nach irgendeinem der Ansprüche 4 bis 5 mit Wasser erhalten wird.

8. Gegenstand nach Anspruch 7, **dadurch gekennzeichnet, daß** das Abbinden des Zements **dadurch** vollzogen wird, daß eine Metallbewehrung, wenigstens teilweise, eingetaucht wird.

9. Gegenstand nach Anspruch 8, **dadurch gekennzeichnet, daß** die Metallbewehrung aus Eisen, aus Stahl, aus galvanisiertem Stahl, aus rostfreiem Stahl, aus passiviertem Stahl besteht.

10. Gegenstand nach irgendeinem der Ansprüche 7 bis 9, **dadurch gekennzeichnet, daß** er ein Bauteil, wie eine Wand, eine Platte, ein Ingenieurbauwerk, wie eine Brücke, eine Fensterbank, eine Treppenstufe und eine Treppensetzstufe, eine Boden- und Wanddeckplatte, eine Schallschutzwand, eine Straßendecke, ein Träger, ein Pfeiler, ein Sichtpuffer, ein Element städtischer Einrichtung, ein Behälter zur Lagerung von flüssigen oder breiartigen Feststoffen ist.

## Claims

1. White cement, **characterised by** the fact that it contains a sulphoaluminate clinker obtained by clinkering, in the presence of oxygen, a raw mix which includes a sulphate of calcium and/or of aluminium, a product of the oxidation of aluminium, a product of the oxidation of calcium, SiO₂ and/or a product which contains silica or silicates, with all these components being present in an anhydrous or hydrated form, individually or in combination; by the fact that the aforementioned white cement contains more than 0% and up to 2.1 % by weight of iron in the form of an oxidation compound of iron and by the fact that it contains no C₄AF phase that can be detected using x-rays.

2. White cement as described in claim 1, **characterised by** the fact that the calcium sulphate comes from the group made up of anhydrite, plaster, natural gypsum, gypsum obtained during the manufacture of mineral compounds such as phosphoric acid, hydrofluoric acid or boric acid; by the fact that the product of the oxidation of aluminium is of natural or industrial origin and contains at least one product from Al₂O₃, Al(OH)₃, AIO(OH) or Al(OH)₃; by the fact that the oxidation product of calcium is one of the group made up of: a carbonate of calcium such as limestone and chalk, an oxide of calcium such as lime, calcium hydroxide.

3. White cement as described in claim 1 or claim 2, **characterised by** the fact that it contains from 99 to 45% of sulphoaluminate clinker and from 1 to 55% of white calcium sulphate.

4. Cement composition **characterised by** the fact that it includes white cement as described in any of the preceding claims whatsoever and glass fibre filler.

5. Cement composition **characterised by** the fact that it includes white cement as described in any of claims 1 to 3 whatsoever and a sand and/or gravel.

6. Process for the preparation of a white cement as described in any of claims 1 to 3 whatsoever, **characterised by** the fact that the white sulphoaluminate clinker is obtained by clinkering in a roller hearth furnace.

7. An object, **characterised by** the fact that it is obtained by the setting of cement as described in any of claims 1 to 3 whatsoever or from a cement composition as described in either of claims 4 and 5, with water.

8. An object as described in claim 7 **characterised by** the fact that setting of the cement takes place with the immersion, at least in part, of metallic reinforcement.

9. An object as described in claim 8 **characterised by** the fact that the metallic reinforcement is made of iron, steel, galvanised steel, stainless steel or passivated steel.

10. An object as described in any of claims 7 to 9 whatsoever, **characterised by** the fact that it is a construction element such as a wall, a slab, a structure such as a bridge, a window sill, a step and riser in a stairway, a wall and floor covering slab, a noise reducing wall, a road surface, a beam, a column, an inspection cover, an item of street furniture or a storage tank for solid, liquid or semi-solid products.
